# EUROPÄISCHE PATENTSCHRIFT

(11) **EP 2 148 255 B1**
(45) Veröffentlichungstag und Bekanntmachung des Hinweises auf die Patenterteilung: **01.02.2012**
(21) Anmeldenummer: 08013296.2
(22) Anmeldetag: 23.07.2008
(51) Int. Cl.: G05B 7/02

(54) **Verfahren zum Betrieb eines Reglers und Regler**
Method for operating a regulator and regulator
Procédé destiné au fonctionnement d'un régulateur et régulateur

(43) Veröffentlichungstag der Anmeldung: 27.01.2010
(73) Patentinhaber: Siemens Aktiengesellschaft, 80333 München (DE)
(72) Erfinder: Grammatke, Kay, Dr., 09232 Hartmannsdorf (DE); Kram, Raimund, 91056 Erlangen (DE)

(56) Entgegenhaltungen:
- US-A1- 2005 258 795
- SCHNEIDER T ET AL: "A multichannel compression strategy for a digital hearing aid" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, Bd. 1, 21. April 1997 (1997-04-21), Seiten 411-414, XP010226222 ISBN: 978-0-8186-7919-3

## Beschreibung

Die Erfindung betrifft ein Verfahren zum Betrieb eines Reglers, insbesondere eines Reglers eines Automatisierungssystems. Sie betrifft weiter eine Vorrichtung, nämlich einen Regler, zur Durchführung des Verfahrens sowie weiter ein Computersystem, insbesondere eine Anlagensteuerung, auf dem ein Computerprogramm mit Programmcodeanweisungen zur Implementierung des Verfahrens geladen ist.

Derartige Regler sind allgemein bekannt und dienen in einer Regelstrecke einer Berechnung einer Stellgröße auf Basis einer Regelabweichung, also einer Abweichung von Ist- und Sollwert (Regelgröße bzw. Führungsgröße). Mittels der Stellgröße wird über ein Stellglied die Regelstrecke wiederum derart beeinflusst, dass sich Ist- und Sollwert einander annähern. Störeinflüsse werden auf diese Weise ausgeglichen und/oder Regelgrößen an sich ändernde Führungsgrößen angeglichen. Nachteilig bei derartigen Reglern ist, dass es besonders bei einer Umschaltung eines Reglerparameters, einer Reglerstruktur und/oder Regelgröße, zu einer Unstetigkeit oder einem Sprung der Stellgröße an einem Reglerausgang kommt. Solche Unstetigkeiten oder Sprünge sind unter anderem deshalb unerwünscht, weil sie eine Belastung für das Stellglied und/oder nachfolgende Komponenten der Regelstrecke darstellen.

Die US 2005/0258795 A1 zeigt einen Ansatz zur Energieverteilung in einem Produktionssystem, wobei z. B. elektrische Motoren während eines Bremsvorgangs in einen generatorischen Betrieb umgeschaltet werden und die gewonnene Energie an andere Einheiten abgegeben wird. In diesem Zusammenhang wird eine Mehrzahl von Rahmenbedingungen durch eine übergeordnete Steuerung überwacht und bei Umschaltungen wird ein kontinuierlicher, stossfreier Betrieb angestrebt.

Aus dem Dokument "A multichannel compression strategy for a digital hearing aid, IEEE International Conference on Munich, Germany 21-24 April 1997" ist im Zusammenhang mit Hörhilfen und der Kompression von Tonsignalen ein Ansatz bekannt geworden, bei dem die zu verarbeitenden Tonsignale im Hinblick auf Schwellwerte überwacht werden, so dass sich z. B. nicht in gleichem Maße wie dies für Sprache wünschenswert ist, eine Verstärkung von Störgeräuschen ergibt. Dazu wird mit einem Ansatz aus der Fuzzy-Logik eine Signalstärke ermittelt, die im Ergebnis Störgeräusche und dergleichen geringer wichtet. Eine Berührung mit der Erfindung ist allenfalls insofern erkennbar, als in beiden Fällen sprunghafte Einflüsse betrachtet werden.

Bei bekannten Reglern wird der Sprung (wobei der Begriff Sprung hier und im Folgenden gleichbedeutend mit dem Begriff Unstetigkeit verwendet wird) am Reglerausgang entweder akzeptiert, oder es wird ein zusätzlicher Stellgrößenfilter zur Reduzierung des Sprungs verwendet. Dies ist jedoch insbesondere im Hinblick auf eine Regelgüte, z. B. eine Regelungsdynamik, nicht zufrieden stellend. Alternativ kann in einem dynamischen Speicher eines den Regler umfassenden Regelsystems ein festgelegter Korrekturfaktor hinterlegt sein, mittels welchem der Sprung am Reglerausgang korrigiert wird. Nachteilig dabei ist jedoch, dass hierfür eine geeignete Reglerstruktur vonnöten ist; es muss also z. B. ein I-Anteil des Reglers vorhanden sein. Des Weiteren erfolgt die Korrektur, also z. B. eine Reduktion des Sprungs, mit einer durch den Regler vorgegebenen Dynamik, was insbesondere bei einem kleinen I-Anteil des Reglers ein langwieriger Prozess ist.

Der Erfindung liegt daher die Aufgabe zugrunde, ein Verfahren zum Betrieb eines Reglers anzugeben, bei welchem die genannten Nachteile vermieden oder zumindest reduziert werden. Darüber hinaus soll eine besonders geeignete Verwendung des Verfahrens angegeben werden. Des Weiteren soll eine zur Durchführung des Verfahrens besonders geeignete Vorrichtung, insbesondere Regler, angegeben werden.

Diese Aufgabe wird bezüglich des Verfahrens erfindungsgemäß mit den Merkmalen des Anspruchs 1 gelöst. Dabei wird eine sprungförmige Änderung einer Stellgröße an einem Reglerausgang mittels eines Sprungausgleichs reduziert. Für den Sprungausgleich wird die Stellgröße mit zumindest einem Zusatzsignal beaufschlagt.

Zweckmäßige Ausführungsformen des Verfahrens sowie der Vorrichtung sind Gegenstand der jeweiligen Unteransprüche.

Bevorzugt erfolgt der Sprungausgleich bei einer Änderung, insbesondere Umschaltung, von zumindest einem Reglerparameter, einer Reglerstruktur, einer Regelgröße und/oder dergleichen. Bei der Umschaltung der Reglerstruktur erfolgt z. B. eine Umschaltung zwischen Reglern des Typs PID, PD, PI, P, I, deren Varianten, Kombinationen daraus oder dergleichen, also beispielsweise eine Umschaltung von PID und P. Zu den umschaltbaren Regelungsgrößen gehören z. B. Druck, Lage, Temperatur, Drehzahl und dergleichen. Insbesondere kann eine Umschaltung zwischen Lageregelung (oder Lageregelung mit Druckbegrenzung) und Druckregelung vorgesehen sein. Mittels des Sprungausgleichs erfolgt dabei eine Überführung einer "herkömmlichen", sprungbehafteten Stellgröße in eine Stellgröße mit Sprungausgleich, woraus zumindest eine reduzierte Sprunghöhe oder ein eliminierter Sprung resultiert. Diese Überführung ist vorteilhafterweise ein gleitender Übergang der Stellgröße in die verbesserte Stellgröße mit Sprungausgleich. Wenn z. B. ein Regler mit PID-Struktur aktiv ist, wird ein Verstärkungsfaktor des I-Anteils des Reglers zu Null gesetzt und eine Beaufschlagung mit dem Zusatzsignal verhindert im Wesentlichen den Sprung der Stellgröße.

Zur Beaufschlagung der Stellgröße mit dem Zusatzsignal ist bevorzugt eine vom Stellgrößenzweig des Reglers umfasste Summationsstelle vorgesehen.

Bevorzugt erfolgt der Sprungausgleich durch negative Beaufschlagung der Stellgröße mit dem Zusatzsignal, was besonders einfach und komfortabel ist. Wenn eine Summationsstelle vorgesehen ist, kann die negative Beaufschlagung mittels Einspeisung der Stellgröße über einen Positiveingang der Summationsstelle und des Zusatzsignals über einen Negativeingang derselben erfolgen. Eine solche negative Beaufschlagung ist besonders vorteilhaft, wenn das Zusatzsignal einer invertierten Sprunghöhe entspricht, da dann der Sprung auf einfache und genaue Art und Weise reduziert wird.

Bevorzugt wird das Zusatzsignal auf Basis einer Differenzbildung/Differentiation ermittelt, also bei einem digitalen Regler beispielsweise als Differenz einer momentanen Stellgröße und einer Stellgröße eines vorhergehenden Regelungstaktes. Bevorzugt werden dabei unmittelbar aufeinander folgende Regelungstakte betrachtet. Hierdurch ist ein einfacher und schneller Sprungausgleich gewährleistet.

Alternativ wird das Zusatzsignal extrapoliert, z. B. linear oder mittels einer Funktion höherer Ordnung extrapoliert; es wird also eine Vorhersage eines bevorstehenden und/oder erwarteten Sprungs der Stellgröße am Reglerausgang auf Basis zumindest zweier bereits erhaltener Stellgrößen, getroffen. Diese Extrapolation resultiert in einem verbesserten Zusatzsignal, also einem genauer an die erwartete sprungförmige Änderung der Stellgröße angepassten Zusatzsignal.

Eine weitere Alternative zum Erhalt Zusatzsignals ist dessen Extrapolation auf Basis von als Modellausgängen erhaltenen Stellgrößen eines Regelkreismodells, das zumindest den Regler ohne nachgeschalteten Sprungausgleich nachbildet. Dies resultiert in einem besonders gut an die Sprunghöhe angepassten Zusatzsignal. Dieses Modell kann ein Beobachtermodell sein.

Es ist bevorzugt vorgesehen, dass das Zusatzsignal nach der Beaufschlagung der Stellgröße abgebaut, beispielsweise im Wesentlichen gegen einen Wert Null geführt, wird. Dieser Abbau kann mittels definierter Kennwerte erfolgen. Es können dazu zeitbasierte Polynome (einschließlich Polynome 1. Ordnung), Filter, insbesondere dynamische Filter mittels welcher das Zusatzsignal insbesondere innerhalb einer definierten Zeitspanne abgebaut wird, oder amplitudenbezogene Kennwerte, wobei z. B. der Abbau über einen festgelegten Anstieg erfolgt, angewandt werden.

Bevorzugt ist die Reglerstruktur proportional (P), integral (I), proportional und differential (PD), proportional, integral und differential (PID) und/oder dergleichen. Der Regler ist also insbesondere ein P-Regler, PD-Regler, PID-Regler oder dergleichen.

Das Verfahren wie hier skizziert und nachfolgend weiter beschrieben kann bevorzugt bei Konstellationen eingesetzt werden, bei denen eine Änderung der Regelgröße aus einer Umschaltung zwischen einer Lageregelung, insbesondere Lageregelung mit Druckbegrenzung, und einer Druckregelung resultiert.

Bei dem Verfahren oder einer nach dem Verfahren arbeitenden Vorrichtung erfolgt also aufgrund der Beaufschlagung mit dem Zusatzsignal statt der sprungartigen Änderung der Stellgröße am Reglerausgang eine "gleitende" Änderung der Stellgröße. Dieser Vorgang und/oder die Ermittlung des Zusatzsignals kann durch zumindest ein Umschaltereignis, aufgrund dessen zumindest ein(e) Reglerparameter, Reglerstruktur und/oder Regelgröße geändert wird, ausgelöst und für eine vorgegebene oder vorgebbare, insbesondere endliche, Zeitspanne oder Taktzahl durchgeführt werden. Wenn der Sprungausgleich derart zeitlich parametriert ist, ergeben sich insbesondere bei getakteten Automatisierungssystemen und/oder -geräten Vorteile bei einer Festlegung von Programmabläufen.

Bezüglich des Reglers, insbesondere für ein einen solchen Regler umfassendes Automatisierungsgerät oder Automatisierungssystem, wird diese Aufgabe erfindungsgemäß dadurch gelöst, dass zumindest eine Sprungausgleichsvorrichtung vorgesehen ist, die zur Reduzierung einer sprungförmigen Änderung einer Stellgröße an einem Reglerausgang mittels eines Sprungausgleichs wirksam ist und zwar wie weiter oben bereits erläutert und nachfolgend weiter beschrieben. Bevorzugt ist dabei zum Sprungausgleich die sprungförmig geänderte Stellgröße mit einem Zusatzsignal beaufschlagbar.

Das Verfahren und seine Ausgestaltungen werden besonders bevorzugt in Software realisiert. Insoweit betrifft die Erfindung auch ein Computerprogramm mit durch einen Computer ausführbaren Programmcodeanweisungen zur Implementierung des Verfahrens wie hier erläutert und nachfolgend weiter beschrieben. Des Weiteren betrifft die Erfindung auch ein Speichermedium mit einem derartigen Computerprogramm und ein Computersystem, insbesondere eine Anlagensteuerung, also eine zur Steuerung einer verfahrenstechnischen Anlage vorgesehene Automatisierungslösung (z. B. ein Automatisierungssystem) mit einem oder mehreren Automatisierungsgeräten, auf der oder auf denen ein derartiges Computerprogramm geladen ist.

Nachfolgend wird ein Ausführungsbeispiel der Erfindung anhand der Zeichnungen näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigen
- FIG 1: eine schematische Darstellung eines Regelkreises gemäß dem Stand der Technik,
- FIG 2: eine schematische Darstellung einer Ausführungsform eines Sprungausgleichs,
- FIG 3: eine graphische Darstellung eines Stellgrößenver- laufes ohne Sprungausgleich gemäß dem Stand der Technik,
- FIG 4: eine graphische Darstellung eines Stellgrößenver- laufes mit Sprungausgleich,
- FIG 5: eine schematische Darstellung einer besonderen Aus- führungsform des Sprungausgleichs, mit einer Um- schaltung der Stellgröße,
- FIG 6: eine schematische Darstellung einer Ausführungsform eines Reglers mit Sprungausgleichsvorrichtung,
- FIG 7: eine schematische Darstellung einer weiteren Aus- führungsform eines Reglers mit Sprungausgleichsvor- richtung und
- FIG 8: eine schematische Darstellung eines Automatisie- rungssystems mit einem Regler wie in FIG 6 darge- stellt.

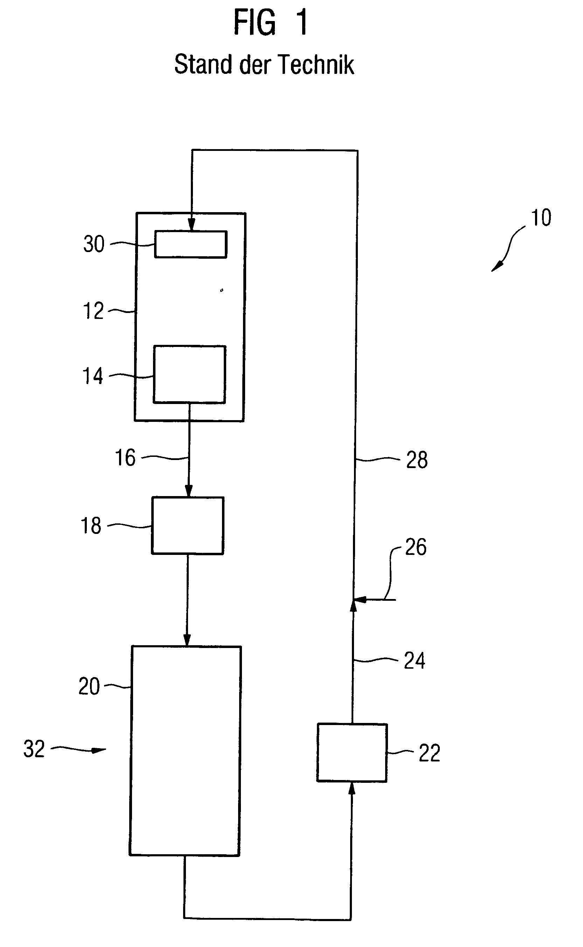

FIG 1 zeigt eine schematische Darstellung eines Regelkreises 10 gemäß dem Stand der Technik. Dieser Regelkreis 10 umfasst einen Regler 12 über dessen Reglerausgang 14 eine Stellgröße 16 an ein Stellglied 18 übertragen wird. Das Stellglied 18 wirkt auf eine Regelstrecke 20, z. B. einen Motor, ein. Aus einem unter Einbeziehung eines Ausgangssignals eines Sensors 22 ermittelten Istwert (Regelgröße) 24 und einem Sollwert (Führungsgröße) 26 wird eine Regelabweichung 28 ermittelt und einem Eingang 30 des Reglers 12 zugeführt. Eine Störgröße 32 kann dabei z. B. auf die Regelstrecke 20 wirken und so den Istwert 24 beeinflussen.

Bei einer Umschaltung z. B. der Struktur des Reglers 12 kommt es üblicherweise zu einer sprungförmigen Änderung der Stellgröße 16, was sowohl das Stellglied 18 als auch die Regelstrecke 20 beansprucht.

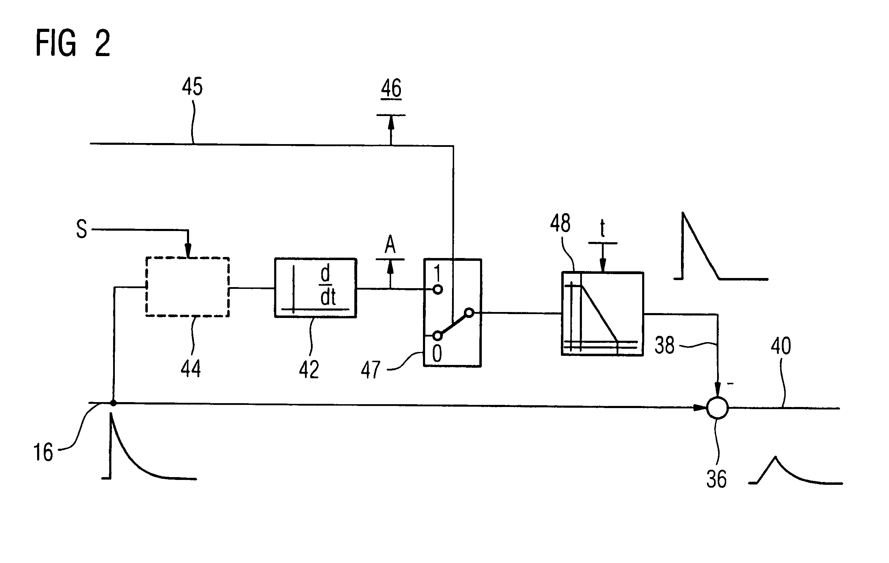

FIG 2 zeigt eine schematische Darstellung einer Ausführungsform eines Verfahrens zum Sprungausgleich, mittels welchem eine sprungförmige Änderung einer Stellgröße 16 reduziert wird. Dazu wird die Stellgröße 16 einer zusätzlichen Summationsstelle 36 zugeführt, an welcher ein Zusatzsignal 38 eingespeist wird. An der Summationsstelle 36 erfolgt eine Beaufschlagung der Stellgröße 16 mit dem Zusatzsignal 38, hier in Form einer negativen Beaufschlagung dargestellt; hieraus resultiert eine verbesserte Stellgröße 40. Entspricht beispielsweise das Zusatzsignal 38 im Wesentlichen einer invertierten Höhe der sprungförmigen Änderung der Stellgröße 16 (Sprunghöhe) bei der Reglerumschaltung, so wird der Sprung eliminiert und die verbesserte Stellgröße 40 ist im Wesentlichen sprungfrei. Alternativ kann auch mittels des Zusatzsignals 38 eine vorgegebene oder vorgebbare Reduktion des Sprungs erreicht werden, so dass eine verbesserte Stellgröße 40 mit reduzierter Sprunghöhe resultiert.

Zur Erzeugung des Zusatzsignals 38 wird mittels eines Differenz- oder Differenzierglieds 42 die Differenz zweier aufeinander folgender Werte für die Stellgröße 16, insbesondere zweier unmittelbar aufeinander folgender Werte der Stellgröße 16, ermittelt. Bei einem kontinuierlichen Regler oder wenn eine Dynamik der Stellgröße 16 über eine längere Zeitspanne berücksichtigt werden soll, kann auch vorgesehen sein, dass zwei nicht unmittelbar aufeinander folgende Werte der Stellgröße 16 betrachtet werden und eine relative zeitliche Änderung durch Differentiation ermittelt wird. Optional kann vorgesehen sein, dass mittels eines Extrapolationsgliedes 44 aus einem momentanen Wert der Stellgröße 16 und mindestens einem zurückliegenden Wert der Stellgröße 16 oder aus mehreren zurückliegenden Werten der Stellgröße 16 (hier als Signale des Regelsystems S dargestellt) durch Extrapolation ein erwarteter zukünftiger Wert der Stellgröße 16 ermittelt wird und dieser extrapolierte Wert, z. B. zusammen mit dem momentanen Wert der Stellgröße 16, der Differenzbildung oder Differentiation zugrunde gelegt wird. Damit ergibt sich ein Maß für eine letzte Änderung der Stellgröße 16 oder ein Maß für eine erwartete zukünftige Änderung A der Stellgröße 16, bei einer sprungbehafteten Stellgröße 16 also zumindest näherungsweise die Sprunghöhe. In Abhängigkeit von dem Umschaltsignal 46, welches auf einer Kommandoebene erzeugt und über eine Leitung 45 einer Umschalteinrichtung 47 zugeführt werden kann, wird dieser Wert als Zusatzsignal 38 der Summationsstelle 36 zugeführt, gegebenenfalls hinsichtlich des Wertebereichs und der Dauer begrenzt mittels eines Begrenzungsglieds 48, welchem eine Ausgleichszeit t zugeführt sein kann; wobei das Begrenzungsglied 48 auch eine Dynamik umfassen kann, die einen Abbau des Zusatzsignals 38 gegen Null bewirkt. Nicht dargestellt in FIG 2 ist, dass mittels des Umschaltsignals 46 und gegebenenfalls der gleichen Umschalteinrichtung 47 eine Umschaltung von Reglerparametern, Reglerstrukturen oder Reglergrößen ausgelöst wird, so dass die Beaufschlagung der Stellgröße 16 mit dem Zusatzsignal 38 sicher mit der Umschaltung von Reglerparametern, -strukturen und dergleichen korreliert ist.

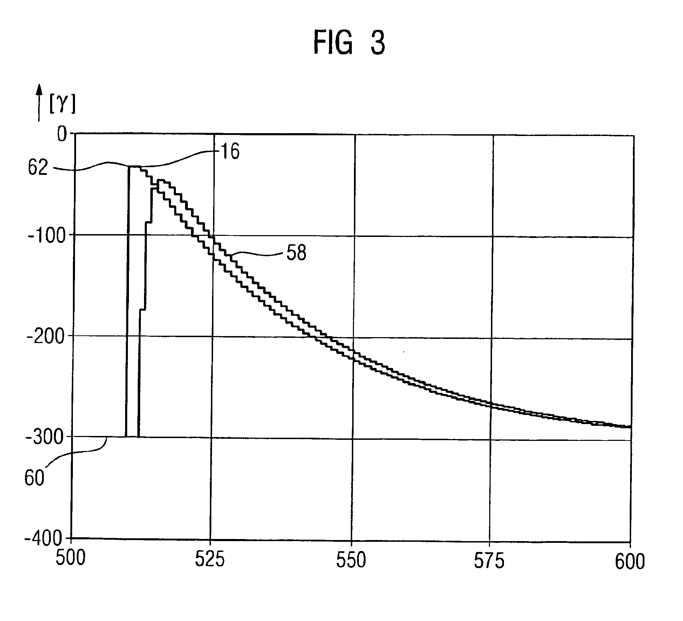

FIG 3 zeigt eine graphische Darstellung eines zeitlichen Verlaufs einer sprungbehafteten Stellgröße 16 bei einer Parameteränderung ohne Reduktion eines Sprungs gemäß dem Stand der Technik, sowie einen Verlauf eines resultierenden Istwertes 24. Ein Wert der Stellgröße 16 steigt dabei innerhalb kürzester Zeit bis auf einen maximalen Wert, hier als maximale Sprunghöhe 62 dargestellt, nahezu senkrecht an (= Sprung), um anschließend während eines gewissen Zeitraumes abzufallen. Der Verlauf des Istwertes 24 ähnelt hier zeitverzögert im Wesentlichen dem Verlauf der Stellgröße 16.

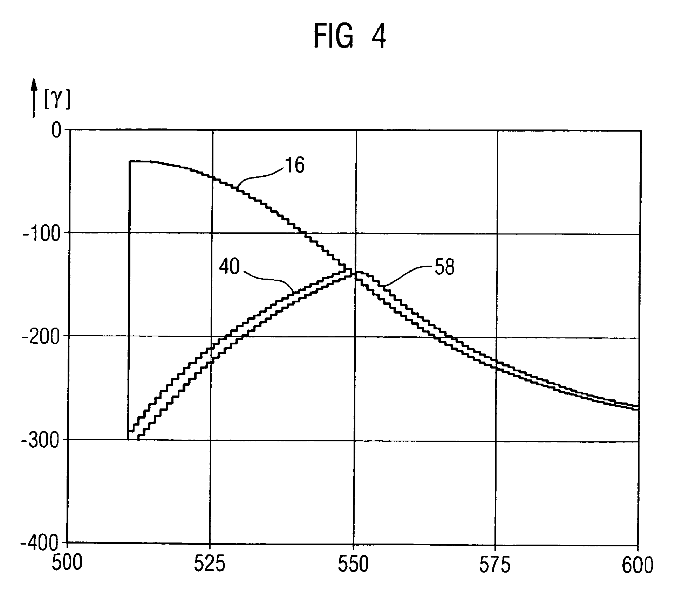

In FIG 4 ist eine graphische Darstellung eines zeitlichen Verlaufes einer durch Sprungausgleich verbesserten Stellgröße 40 bei einer Parameteränderung dargestellt. Zusätzlich ist der Verlauf einer Stellgröße 16 ohne Sprungausgleich dargestellt. Dabei steigt im Vergleich zum Verlauf der Stellgröße 16 ohne Sprungausgleich der Wert der verbesserten Stellgröße 40 über einen längeren Zeitraum bis auf einen verbesserten (verringerten) Maximalwert 64 an. Des Weiteren ist der Verlauf des auf der verbesserten Stellgröße 40 basierenden (verbesserten) Istwertes 24 dargestellt, welcher hier zunächst bis zu einem maximalen Istwert ansteigt, um danach über einen gewissen Zeitraum wiederum abzufallen. Es wird mittels des Verfahrens zum Sprungausgleich also ein Sprung der Stellgröße 16 "verschliffen", so dass eine verbesserte Stellgröße 40 resultiert.

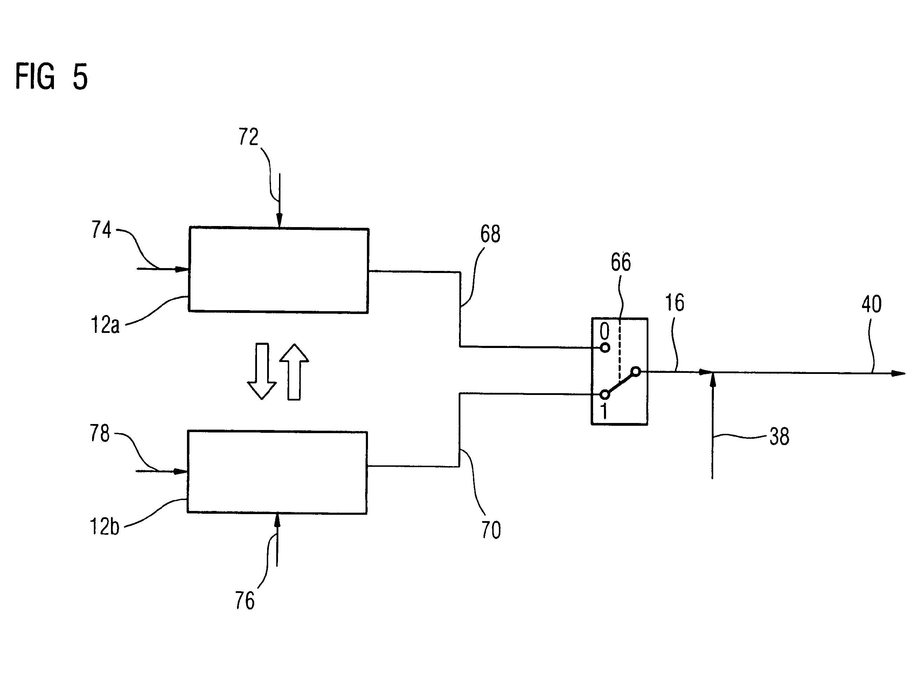

FIG 5 zeigt eine schematische Darstellung einer besonderen Ausführungsform des Verfahrens zum Sprungausgleich, mit einer Umschaltung der Stellgröße 16, also einer Stellgrößenumschaltung von einer ersten Stellgröße 68, hier einer Lage-Stellgröße, und einer zweiten Stellgröße 70, hier einer Druck-Stellgröße. Die erste Stellgröße 68 wird dabei von einem ersten Regler 12a, hier als als Lageregler fungierend angenommen, auf Basis eines lagebezogenen Ist- und Sollwertes 24, 26 (in FIG 1 dargestellt), hier als Lageistwert 72 und Lagesollwert 74 dargestellt, erzeugt. Mittels des zweiten Reglers 12b, hier als als Druckregler fungierend angenommen, wird auf Basis eines druckbezogenen Ist- und Sollwertes 24, 26 (in FIG 1 dargestellt), hier Druckistwert 76 und Drucksollwert 78, die zweite Stellgröße 70 erzeugt. Die bei der Umschaltung von erster und zweiter Stellgröße 68, 70 erhaltene, sprungbehaftete Stellgröße 16, welche hier also entsprechend der Umschaltung entweder lage- oder druckbezogen ist, wird mit dem Zusatzsignal 38 beaufschlagt und so eine verbesserte Stellgröße 40 erhalten.

In einem Beispiel erfolgt die Umschaltung von Lage- und Druckregler auf dieselbe Stellgröße 16. Der Lageregler ist zunächst aktiv bis eine Regelgröße umgeschaltet wird und vom Lageregler zum Druckregler "gewechselt" wird. Eine extrapolierte Initialisierung des Druckreglers stimmt aufgrund verrauschter Istwerte 21 (in FIG 1 dargestellt) nicht exakt, der verbliebene Sprung wird jedoch durch das Verfahren zum Sprungausgleich verschliffen. Alternativ kann eine Umschaltung vom Lage- auf den Druckregler oder zwischen verschiedensten anderen Reglertypen, Regelgrößen und/oder Stellgrößen erfolgen.

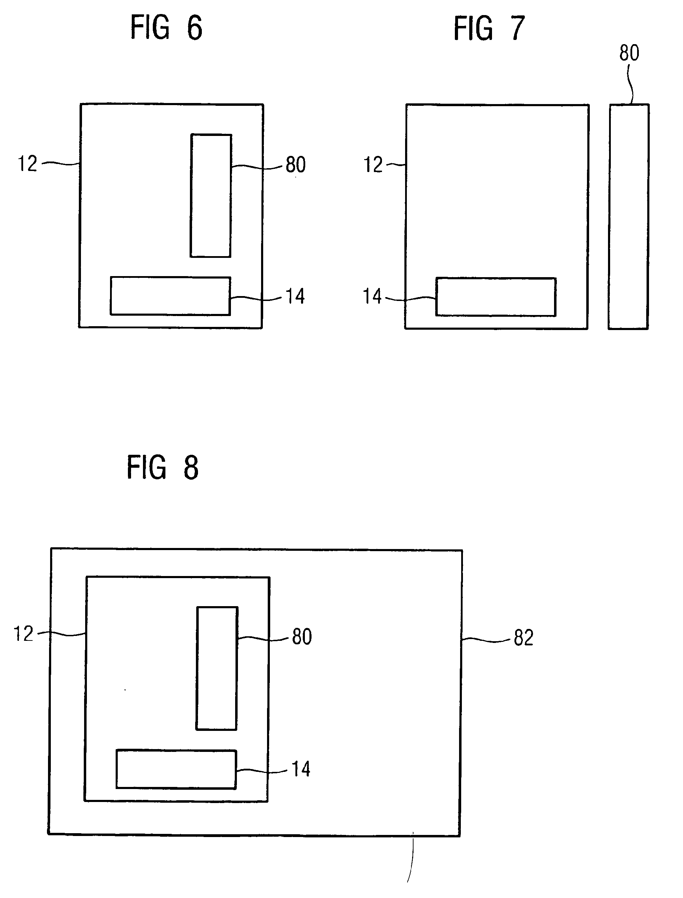

In FIG 6 ist eine schematische Darstellung einer Ausführungsform eines erfindungsgemäßen Reglers 12 gezeigt, wobei der Regler 12 eine Sprungausgleichsvorrichtung 80 zum zumindest teilweisen Sprungausgleich einer Stellgröße 16 (in FIG 1 bis 5 dargestellt) wie in FIG 2, 4 und/oder 5 beschrieben, umfasst.

In FIG 7 ist eine schematische Darstellung einer weiteren Ausführungsform eines erfindungsgemäßen Reglers 12 gezeigt, bei welcher die Sprungausgleichsvorrichtung 80 dem Regler 12 zugeordnet ist, also z. B. mit diesem oder einer nachfolgenden Summationsstelle oder dergleichen z. B. datentechnisch gekoppelt ist.

Das schematisch in FIG 8 dargestellte Automatisierungssystem 82 umfasst einen Regler 12 wie in FIG 6 dargestellt, alternativ kann jedoch ein Regler 12 wie in FIG 7 dargestellt umfasst sein. Das Automatisierungssystem 82 ist zur Steuerung und/oder Überwachung eines nicht näher dargestellten technischen Prozesses vorgesehen, der z. B. einen von dem Regler 12 geregelten Motor oder dergleichen umfasst.

Damit lässt sich die Erfindung wie folgt angeben: Angegeben wird ein Verfahren zum Betrieb zumindest eines Reglers 12, 12a, 12b, wobei eine sprungförmige Änderung einer Stellgröße 16 an einem Reglerausgang 14, z. B. infolge einer Reglerparameteränderung oder -umschaltung, einer Reglerstrukturänderung oder -umschaltung, oder einer Regelgrößenumschaltung, z.B. Positionsregelung oder Drehzahlregelung nach Kraft- oder Druckregelung, mittels eines Sprungausgleichs reduziert wird und zum Sprungausgleich die sprungförmig geänderte Stellgröße 16 mit einem Zusatzsignal 38 beaufschlagt wird sowie ein Regler 12, 12a, 12b zur Durchführung des Verfahrens.

## Patentansprüche

1. Verfahren zum Betrieb zumindest eines Reglers (12, 12a, 12b),
**dadurch gekennzeichnet,**
**dass** eine sprungförmige Änderung einer Stellgröße (16) an einem Reglerausgang (14) mittels eines Sprungausgleichs reduziert wird und
**dass** zum Sprungausgleich die sprungförmig geänderte Stellgröße (16) mit einem Zusatzsignal (38) beaufschlagt wird.

2. Verfahren gemäß Anspruch 1 wobei das Zusatzsignal (38) auf Basis einer Differenzbildung/Differentiation einer momentanen Stellgröße (16) und einer Stellgröße (16) eines vorhergehenden Regelungstaktes ermittelt wird.

3. Verfahren gemäß Anspruch 1, wobei das Zusatzsignal (38) auf Basis zumindest zweier bereits erhaltener und/oder bekannter Stellgrößen (16) extrapoliert wird.

4. Verfahren gemäß Anspruch 1 oder 3, wobei das Zusatzsignal (38) auf Basis zurückliegender Stellgrößen (16) zurückliegender Modellausgänge extrapoliert wird.

5. Verfahren gemäß einem der vorangehenden Ansprüche, wobei das Zusatzsignal (38) nach der Beaufschlagung abgebaut wird.

6. Verfahren gemäß einem der vorangehenden Ansprüche, wobei der Regler (12, 12a, 12b) ein P, PD und oder PID Regler (12, 12a, 12b) ist.

7. Verfahren gemäß einem der vorangehenden Ansprüche für einen Sprungausgleich bei einer Änderung, insbesondere Umschaltung, von zumindest einem Reglerparameter, zumindest einer Regler-Struktur und/oder zumindest einer Regelgröße.

8. Verwendung eines Verfahrens gemäß einem der vorangehenden Ansprüche für eine Lageregler/Druckregler Umschaltung.

9. Regler (12, 12a, 12b), insbesondere für ein Automatisierungssystem (82), mit einer Sprungausgleichsvorrichtung (80) zur zumindest teilweisen Reduzierung einer sprungförmigen Änderung einer Stellgröße (16) an einem Reglerausgang (14) mittels eines Sprungausgleichs gemäß einem der Ansprüche 1 bis 8.

10. Computerprogramm mit durch einen Computer ausführbaren Programmcodeanweisungen zur Implementierung des Verfahrens nach einem der Ansprüche 1 bis 8 wenn das Computerprogramm auf einem Computer, insbesondere durch eine Anlagensteuerung, ausgeführt wird.

11. Speichermedium mit einem durch einen Computer ausführbaren Computerprogramm gemäß Anspruch 10.

12. Computersystem, insbesondere Anlagensteuerung, auf dem ein Computerprogramm nach Anspruch 10 geladen ist.

## Claims

1. Method for operating at least one regulator (12, 12a, 12b), **characterised in that**
a step change in a regulating variable (16) is reduced at a regulator output (14) by means of step change compensation and,
to compensate for the step change, an additional signal (38) is applied to the regulating variable (16) that has undergone the step change.

2. Method according to claim 1, with the additional signal (38) being determined on the basis of a differentiation of a current regulating variable (16) and a regulating variable (16) of a preceding regulation cycle.

3. Method according to claim 1, with the additional signal (38) being extrapolated on the basis of at least two previously received and/or known regulating variables (16).

4. Method according to claim 1 or 3, with the additional signal (38) being extrapolated on the basis of past regulating variables (16) of past model outputs.

5. Method according to one of the preceding claims, with the additional signal (38) being allowed to decay after its application.

6. Method according to one of the preceding claims, with the regulator (12, 12a, 12b) being a P, PD and/or PID regulator (12, 12a, 12b).

7. Method according to one of the preceding claims for compensating for a step change, especially for a switchover, of at least one regulator parameter, at least one regulator structure and/or at least one regulator variable.

8. Use of a method according to one of the preceding claims for a position regulator/pressure regulator switchover.

9. Regulator (12, 12a, 12b), especially for an automation system (82), with a step change compensation facility (80) for at least partly reducing a step change in a regulating variable (16) at a regulator output (14) by means of a step change compensation according to one of claims 1 to 8.

10. Computer program with program code instructions able to be executed by a computer for implementing the method according to one of claims 1 to 8 when the computer program is executed on a computer, especially by a system controller.

11. Storage medium, with a computer program able to be executed by a computer according to claim 10.

12. Computer system, especially system controller, on which a computer program according to claim 10 is loaded.

## Revendications

1. Procédé pour faire fonctionner au moins un régulateur ( 12, 12a, 12b ) ,
**caractérisé**
**en ce que** l'on réduit, au moyen d'une compensation de saut, une variation en forme de saut d'une grandeur ( 16 ) de réglage sur une sortie ( 14 ) du régulateur, et
**en ce que**, pour la compensation de saut, on injecte un signal ( 38 ) supplémentaire à la grandeur ( 16 ) de réglage modifiée en forme de saut.

2. Procédé suivant la revendication 1, dans lequel on détermine le signal ( 38 ) supplémentaire sur la base d'une formation de différence/différentiation entre une grandeur ( 16 ) de réglage présente et une grandeur ( 16 ) de réglage d'une cadence de régulation précédente.

3. Procédé suivant la revendication 1, dans lequel on extrapole le signal ( 38 ) supplémentaire sur la base d'au moins deux grandeurs ( 16 ) de réglage déjà obtenues et/ou connues.

4. Procédé suivant la revendication 1 ou 3, dans lequel on extrapole le signal ( 38 ) supplémentaire de la base de grandeurs ( 16 ) de réglage précédentes de sortie de modèle précédent.

5. Procédé suivant l'une des revendications précédentes, dans lequel on forme le signal ( 38 ) supplémentaire après l'injection.

6. Procédé suivant l'une des revendications précédentes, dans lequel le régulateur ( 12, 12a, 12b ) est un régulateur ( 12, 12a, 12b ) P, PD et/ou PID.

7. Procédé suivant l'une des revendications précédentes, pour une compensation de saut lors d'une variation, notamment d'une commutation d'au moins un paramètre de régulateur, d'au moins une structure de régulateur et/ou d'au moins une grandeur de régulation.

8. Utilisation d'un procédé suivant l'une des revendications précédentes, pour une commutation de régulateur de position/régulateur de pression.

9. Régulateur ( 12, 12a, 12b ), notamment pour un système ( 82 ) d'automatisation, ayant un dispositif ( 80 ) de compensation de saut, pour réduire, au moins en partie, une variation en forme de saut d'une grandeur ( 16 ) de réglage sur une sortie ( 14 ) du régulateur au moyen d'une compensation de saut suivant l'une des revendications 1 à 8.

10. Programme informatique ayant des instructions de code de programme pouvant être réalisées par un ordinateur, pour la mise en oeuvre du procédé suivant l'une des revendications 1 à 8, lorsque le programme informatique est réalisé sur un ordinateur, notamment par une commande d'installation.

11. Support de mémoire ayant un programme informatique pouvant être réalisé par un ordinateur suivant la revendication 10.

12. Système informatique, notamment commande d'installation, sur lequel un programme informatique suivant la revendication 10 est chargé.
